# EUROPÄISCHE PATENTSCHRIFT

(11) **EP 3 068 657 B1**
(45) Veröffentlichungstag und Bekanntmachung des Hinweises auf die Patenterteilung: **21.08.2019**
(21) Anmeldenummer: 15700534.9
(22) Anmeldetag: 07.01.2015
(51) Int. Cl.: B60L 3/00, B60L 3/04, H02P 25/22, B64D 27/24, H02P 27/06, H02M 7/493, H02P 3/22, H02P 5/74, H02M 1/32

(54) **REDUNDANTES ANTRIEBSSYSTEM**
REDUNDANT DRIVE SYSTEM
SYSTÈME D'ENTRAÎNEMENT REDONDANT

(30) Priorität: 15.01.2014 EP 14151300
(43) Veröffentlichungstag der Anmeldung: 21.09.2016
(73) Patentinhaber: Siemens Aktiengesellschaft, 80333 München (DE)
(72) Erfinder: STEFFANI, Hans Friedrich, 90480 Nürnberg (DE)
(86) Internationale Anmeldenummer: PCT/EP2015/050133
(87) Internationale Veröffentlichungsnummer: WO 2015/106993

(56) Entgegenhaltungen:
- EP-A1- 0 588 628
- WO-A1-2014/006157
- US-A1- 2007 070 667
- US-A1- 2013 200 827

## Beschreibung

Die Erfindung betrifft ein Antriebssystem, wobei das Antriebssystem mindestens zwei Wechselrichter und mindestens zwei Motoren aufweist. Die Erfindung betrifft weiter ein Verfahren zum Redundanzprinzip eines Antriebssystems.

In der elektrischen Antriebstechnik werden Motoren dazu genutzt, sowohl um Maschinen anzutreiben als auch um Fahrzeuge zu beschleunigen oder zu verzögern. Die Motoren werden dabei über leistungselektronische Stellglieder mit Energie versorgt. Diese Leistungselektronik dient in der Regelung oder Steuerung als Stellglied für die Energieübertragung vom Energieversorgungsnetz zu den Motoren. Für Drehstrommotoren, wie Synchronmotor oder Asynchronmotor, werden als leistungselektronische Stellglieder Wechselrichter verwendet. In vielen Anwendungsbereichen wird dabei für jeden Motor ein Wechselrichter verwendet. Dies hat den Vorteil, dass bei mehreren Motoren jeder von ihnen individuell in Bezug auf Drehmoment geregelt werden kann. In einer anderen kostengünstigeren Variante werden mehrere Motoren beispielsweise zwei oder vier von einem Wechselrichter versorgt. Durch diese Anordnung, die auch als Gruppenantrieb bezeichnet wird, können die Kosten für das Antriebssystem reduziert werden. Allerdings ist ein individuelles Regeln der Motoren im Bezug auf Drehmomentaufteilung zwischen den angeschlossenen Motoren mit dieser Anordnung nicht mehr möglich. Gleichzeitig hat ein Ausfall eines Wechselrichters dann Auswirkung auf alle von ihm versorgten Motoren, so dass diese zu der Antriebsaufgabe nichts mehr beitragen können. Die Fähigkeit, auch bei einem Ausfall einer Antriebskomponente weiter den Betrieb aufrecht zu erhalten wird als Redundanz bezeichnet. Der Betrieb bei Ausfall einer Antriebskomponente ist analog dazu als Redundanzbetrieb bekannt. Auch bei der Anordnung bei der ein Motor durch jeweils einen Wechselrichter versorgt wird, hat es sich als negativ erwiesen, wenn ein Wechselrichter ausfällt. Dies hat zur Folge, dass auch der betreffende Motor kein Drehmoment mehr liefern kann.

Um den Ausfall eines kompletten Motors zu verhindern, kommen Motoren mit zwei Wicklungssystemen zur Anwendung. Hier wird jedes der beiden Wicklungssysteme durch einen separaten Wechselrichter gespeist. Bei Ausfall eines Wechselrichters geht nunmehr nur ein Teil des vom Motor lieferbaren Moments verloren. Nachteil dieser Anordnung sind die erhöhten Kosten, die durch das zusätzliche Wicklungssystem entsteht. Gleichzeitig ergeben sich auch höhere Kosten durch die im Vergleich zum Gruppenantrieb höhere Anzahl an Wechselrichtern.

WO2014006157A1 offenbart ein Antriebssystem mit zwei Motoren und zwei Wechselrichtern; US20130200827A1 offenbart ein Antriebssystem mit zwei Wechselrichtern und einem Motor umfassend zwei Stator-Wicklungen.

Der Erfindung liegt die Aufgabe zugrunde, ein Antriebssystem anzugeben, das auch bei Ausfall eines Wechselrichters den Betrieb aller Motoren noch ermöglicht und dabei gleichzeitig kostengünstig herstellbar ist.

Diese Aufgabe wird durch ein Antriebssystem gelöst, wobei das Antriebssystem mindestens zwei Wechselrichter und mindestens zwei Motoren aufweist, wobei die Motoren jeweils einen Stator und einen Läufer aufweisen, wobei die zumindest zwei Motoren im Stator jeweils mindestens ein erstes Wicklungssystem und ein zweites Wicklungssystem aufweisen, wobei das jeweilige erste Wicklungssystem mit einem ersten Wechselrichter und das jeweilige zweite Wicklungssystem mit einem zweiten Wechselrichter elektrisch verbunden sind, wobei die Wicklungssysteme der einzelnen Motoren derart ausgebildet sind, dass eine Leistungsaufteilung und/oder Momentenaufteilung zwischen den Motoren durch die Wechselrichter steuerbar und/oder regelbar ist. Diese Aufgabe wird weiter durch ein Verfahren zum Redundanzbetrieb eines Antriebssystems gelöst, wobei die Motoren bei Ausfall eines ersten Wechselrichters mit dem zweiten Wechselrichter elektrische Energie austauschen.

Der Erfindung liegt die Erkenntnis zugrunde, dass sich für ein Antriebssystem mit zwei oder mehr Motoren die Ausfallsicherheit dadurch erhöhen lässt, dass die Motoren im Stator mit mehreren Wicklungssystemen ausgeführt werden. Dabei können die Wicklungssysteme eines Motors jeweils gleich oder unterschiedlich ausgeführt sein. Für den Fall, dass die Wicklungssysteme gleich, das heißt insbesondere mit gleicher Windungszahl, ausgeführt sind, kann eine symmetrische Lage der Wicklungssysteme sicherstellen, dass die einzelnen Wicklungssysteme eines Motors nicht unterscheidbar sind. Die Zuordnung, welches Wicklungssystem das erste, das zweite und das weitere ist, definiert sich dann daraus, an welchen Wechselrichter das jeweilige Windungssystem angeschlossen ist.

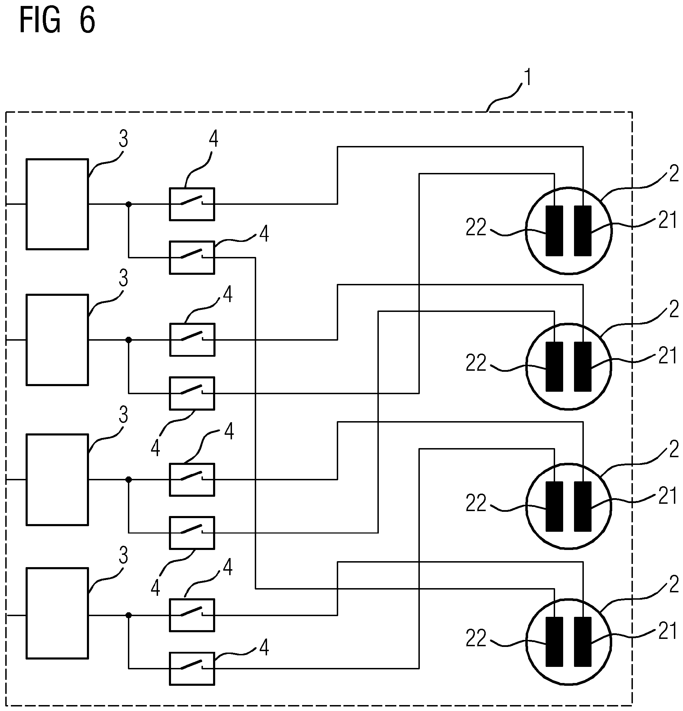

Dabei ist die Zuordnung der Wechselrichter, das heißt die Bezeichnung, welcher Wechselrichter der erste Wechselrichter und welcher Wechselrichter der zweite Wechselrichter ist, davon abhängig, an welchem Wicklungssystem des Motors der Wechselrichter angeschlossen ist. Insbesondere bei Antriebssystemen mit mehr als zwei Motoren und mehr als zwei Wechselrichtern ist es dabei möglich, dass ein bestimmter Wechselrichter für einen ersten Motor beispielsweise den ersten Wechselrichter darstellt und für einen anderen Motor den zweiten Wechselrichter darstellt. Die Bezeichnung der einzelnen Wechselrichter kann sich demnach für die einzelnen Motoren unterscheiden. Näheres dazu ist auch anhand der FIG 6 beschrieben.

Bei den Motoren kann es sich um Gleichstrommotoren oder Wechselstrommotoren handeln. Bei Wechselstrommotoren kann es sich um Asynchronmotoren oder Synchronmotoren handeln. Der Läufer, auch als Rotor bezeichnet, kann als Kurzschlussläufer, Schleifringläufer, Reluktanzläufer oder als permanenterregter Läufer ausgeführt sein. Die unterschiedlichen Wicklungssysteme eines Motors werden dabei durch unterschiedliche Wechselrichter gespeist. Um das Antriebssystem kostengünstig auszuführen, speist jeder Wechselrichter Wicklungssysteme von mehreren Motoren. Dabei hat es sich als besonders vorteilhaft herausgestellt, wenn die Anzahl der Wechselrichter mit der Anzahl der Motoren identisch ist. Bei einem beispielhaften Aufbau mit zwei Wechselrichtern und zwei Motoren können bei Ausfall eines Wechselrichters die beiden Motoren, die mit diesem Wechselrichter verbunden sind, immer noch mindestens die Hälfte ihres Drehmoments oder ihrer Leistung zur Verfügung stellen. Dabei hängt es unter anderem vom Arbeitspunkt oder anderen Komponenten, wie beispielsweise der Kühlung, des Motors ab, ob das Drehmoment oder die Leistung das begrenzende Element darstellt. Es kann vorteilhaft sein, die Wechselrichter in Bezug auf das am Motor verfügbares Drehmoment und/oder Leistung größer zu dimensionieren, so dass bei Ausfall eines Wechselrichters, also im Redundanzbetrieb, auch noch mehr als die Hälfte des Antriebsmomentes oder der Antriebsleistung zur Verfügung steht. So steht beispielsweise bei einer Dimensionierung der Wechselrichter auf 120% noch mindestens 60% der Leistungsfähigkeit bei Ausfall eines Wechselrichters zur Verfügung. Je nach Dimensionierung sind bei einem Wechselrichterausfall für die am Motor verfügbare Leistungsfähigkeit bei Ausfall eines Wechselrichters hier auch Werte im Bereich von 50% bis 100%, insbesondere 66%, 75% oder 90% möglich und sinnvoll. Die Leistungsfähigkeit eines Motors kann sich aus seinem Drehmoment, seiner Leistung oder seinem Verhalten in der Feldschwächung, sowie einer Kombination dieser Größen ergeben. Die Wahl des im Ausfallbetrieb realisierbaren Momentes oder der realisierbaren Leistung hängt unter anderem vom Anwendungsfall ab.

Die Eigenschaft der Redundanz des elektrischen Antriebssystems ist beispielsweise besonders von Vorteil, bei der Anwendung in elektrisch betriebenen Fahrzeugen, wie Schienenfahrzeugen, Landfahrzeugen, Luftfahrzeugen oder Wasserfahrzeugen. So ergeben sich beim Einsatz in Flugzeugen besondere Vorteile. Wenn dort die beiden Motoren, die durch Ausfall eines Wechselrichters in ihrer Leistungsfähigkeit reduziert werden, auf gegenüberliegenden Seiten des Flugzeugs angeordnet sind, zum Beispiel ein Motor am rechten Flügel und ein Motor am linken Flügel, so wirkt sich der Ausfall eines Wechselrichters auf diese beiden Seiten des Flugzeuges gleichmäßig aus, da beide Motoren mit verminderter Leistung weiterbetrieben werden können. Besondere Maßnahmen zur Stabilisierung des Flugzeugs zum Beispiel in Flugrichtung, die bei dem Ausfall eines kompletten Motors auf nur einer Seite des Flugzeugs notwendig würden, können damit unterbleiben. Aber auch für andere Fahrzeugarten, wie beispielsweise Schienenfahrzeuge, hat sich dieser Antrieb als vorteilhaft erwiesen. Betrachtet man auch hier eine beispielshafte Anordnung, bei der zwei Motoren aus jeweils zwei Umrichtern über jeweils zwei getrennte Wicklungssysteme in den Motoren gespeist werden, so ergeben sich auch hier Vorteile. Bei dem Ausfall eines der beiden Wechselrichter reduziert sich das maximale Moment je nach Dimensionierung beispielsweise auf etwa die Hälfte. Eine Reduktion des maximalen Moments auf ungefähr die Hälfte von zwei Motoren ist jedoch günstiger als der Ausfall eines kompletten Motors. Denn gerade bei ungünstigen Witterungsverhältnissen wie Schnee, Regen oder Eis kann sich das maximale Moment, das zwischen Rad und Schiene übertragen werden kann, deutlich reduzieren. Damit kann ein höheres Moment eines Motors gar nicht mehr ausgenutzt werden. Kommt es dann, wie beschrieben, durch den Ausfall eines Wechselrichters noch zum Ausfall eines kompletten Motors, so kann an Steigungen ein Anfahren des Zuges komplett unmöglich werden. Dieses Liegenbleiben verursacht eine kostspielige Bergungsaktion und führt zur Verärgerung von Fahrgästen.

Auch für andere Fahrzeuge, wie beispielsweise Autos, Lastwagen oder Busse, die durch Räder oder Ketten angetrieben werden, bietet das beschriebene Antriebssystem Vorteile. Aus Gründen der Fahrstabilität werden in den meisten Antriebskonfigurationen immer beide Räder einer Achse angetrieben. Um auch bei Ausfall eines Wechselrichters noch ein stabiles Fahrverhalten sicherstellen zu können ist es günstiger, wenn beide Räder einer Achse mit verminderter Leistung weiter Betrieb machen als wenn auf einer Seite der Achse die volle Antriebsleistung am Rad zur Verfügung steht und an der anderen Seite keine. Somit kann durch das erfindungsgemäße Antriebssystem bei Ausfall eines Wechselrichters noch ein hinreichend gutes Fahrverhalten einfach und kostengünstig realisiert werden.
Bei Schiffen ergeben sich Vorteile insbesondere dann, wenn mehr als eine Schiffsschraube vorhanden ist. Ähnlich wie bei einem Flugzeug ist die Reduktion der Antriebsleistung an den vorhandenen Schiffsschrauben günstiger als der Ausfall der Antriebsleistung einer Schiffsschraube.

Weitere Systeme, bei denen sich die Reduktion des Drehmoments zweier Motoren günstiger auswirkt als der Ausfall eines kompletten Motors, sind beispielsweise Fördersysteme. Ein Beispiel für ein Fördersystem, das im besonderen für die Anwendung des erfindungsgemäßen Antriebssystems geeignet ist, stellt eine Papierbahn dar. Allgemein kann es bei Fördersystemen zu einer Unterbrechung der Produktion kommen, wenn an einer Seite ein Antrieb ausfällt und an der anderen Seite mit hohem Moment der Antrieb weiter in Betrieb bleibt. Bei einem Förderband beispielsweise nimmt die Belastung auf das Band deutlich zu, so dass es im Extremfall zu einem Riss des Transportbandes kommen kann. Auch bei anderen Transportsystemen, zum Beispiel über angetriebene Rollen kann der Ausfall eines Motors sich deutlich negativer auf das zu transportierende Produkt auswirken als eine gleichzeitige Reduktion des Motormoments mehrerer Motoren. Diese negativen Auswirkungen können sich dadurch äußern, dass kein Transport von Gütern mehr erfolgen kann oder dass das Transportgut sich aufgrund unterschiedlicher Kräfte verformt oder anderweitig beschädigt wird. Die Auswirkungen dabei reichen von einer Behinderung einer Fertigung bis hin zu großen und teuren Ausschussmengen. Das erfindungsgemäße Antriebssystem ist in der Lage, diese negativen Auswirkungen zu verhindern und einen sicheren Transport, sicher sowohl für das Transportgut als auch das Transportsystem, zu gewährleisten.

Bei einer weiteren vorteilhaften Ausgestaltungsform weisen die Motoren weitere Wicklungssysteme auf. Damit ist es möglich, die Motoren durch weitere Wechselrichter zu speisen.

Dadurch reduzierte sich die Leistungsfähigkeit des Motors deutlich weniger als bei einer Speisung durch nur zwei Wechselrichter. In erster Näherung reduziert sich bei einem Motor mit n gleichen Wicklungssystemen die Leistungsfähigkeit bei Ausfall eines an einem Wicklungssystem angeschlossenen Wechselrichters um 1/n. Als besonders günstig hat es sich erwiesen, wenn auch für diesen Anwendungsfall die Anzahl der Wechselrichter gleich der Anzahl der Motoren ist und die Wicklungssysteme dieser Motoren jeweils durch die genannten Wechselrichter versorgt werden. Als besonders günstig hat sich die Kombination mit drei Wechselrichtern an drei Motoren, die jeweils drei Wicklungssysteme aufweisen erwiesen. Der Ausfall eines Wechselrichters reduziert die Leistungsfähigkeit der Motoren dabei um maximal 33%. Bei Flugzeugen hat sich diese Konfiguration als besonders günstig erwiesen, da dabei zwei Motoren jeweils symmetrisch zu einer Bewegungsachse des Flugzeugs angeordnet sein können und der dritte Motor in unmittelbarer Nähe zur Bewegungsachse, vergleichbar mit dem Propeller eines einmotorigen Flugzeugs, angeordnet werden kann. Dies bewirkt eine besondere Flugstabilität. Aus Symmetriegründen, wie oben bereits für Fahrzeuge, insbesondere Luftfahrzeuge, diskutiert, eignen sich auch insbesondere geradzahlige Anzahlen von Wechselrichtern und Motoren, da diese in vielen Fahrzeugen symmetrisch angeordnet werden können. Ein besonders günstiger Kompromiss zwischen gutem Redundanzverhalten und günstigen Kosten stellt das Antriebssystem mit vier Wechselrichtern und vier Motoren dar, die jeweils über vier Wicklungssysteme von den vier Wechselrichtern gespeist werden, da sich dann ein Ausfall eines Wechselrichters gleichmäßig auf alle Motoren auswirkt.

Bei einer weiteren vorteilhaften Ausgestaltungsform sind die Wicklungssysteme der jeweiligen Motoren mit Wechselrichtern elektrisch verbunden, die an unterschiedlichen Zwischenkreisen angeordnet sind. Aus Kostengründen kann es sinnvoll sein, mehrere Wechselrichter aus einem Zwischenkreis und einer entsprechenden dazugehörigen Eingangsschaltung, beispielsweise einem Gleichrichter oder DC/DC Steller, zu versorgen anstelle für jeden Wechselrichter einen eigenen Zwischenkreis vorzusehen. Dabei hat es sich als besonders vorteilhaft herausgestellt, dass die Wicklungssysteme eines jeden Motors jeweils von Wechselrichtern versorgt werden, die an unterschiedlichen Zwischenkreisen angeschlossen sind. Um die Vorteile des redundanten Antriebssystems bestmöglich nutzen zu können, sollen sich auch Fehler und Ausfälle in der Umgebung der Wechselrichter nur wenig auf die Leistungsfähigkeit der Motoren auswirken. Eine mögliche Quelle für Ausfälle stellt beispielsweise der Leistungshalbleiter oder der Zwischenkreiskondensator dar. Der Ausfall eines Zwischenkreiskondensators, beispielsweise durch einen Kurzschluss im Kondensator oder seiner Verschienung, an der dieser Zwischenkreiskondensator angeschlossen ist, kann genauso wie ein durchlegierter Leistungshalbleiter den gleichzeitigen Ausfall der an diesem Zwischenkreis angeschlossenen Wechselrichter bewirken. Daher ist es besonders vorteilhaft, die Wicklungssysteme eines jeden Motors über Wechselrichter zu speisen, die aus unterschiedlichen Zwischenkreisen versorgt werden. Damit wirkt sich auch der Ausfall eines Zwischenkreises nur gering auf die Leistungsfähigkeit der jeweiligen darüber versorgten Motoren aus. Es kann damit sichergestellt werden, dass der Ausfall eines Zwischenkreises zu einem kompletten Ausfall eines Motors führt.

Die Wicklungssysteme in den Motoren sind derart unterschiedlich ausgeführt, dass sich die Versorgung durch die einzelnen Wechselrichter jeweils unterschiedlich auf die Motoren auswirkt. Dies kann dadurch erreicht werden, dass sich die Wicklungssysteme in Bezug auf die Windungszahl oder der Lage zueinander unterscheiden. Dann hat eine angelegte Spannung oder auch Spannungsänderung am Wechselrichter eine unterschiedliche Auswirkung auf die angeschlossenen Wicklungssysteme und damit auf die unterschiedlichen Motoren. Dadurch lässt sich eine Aufteilung des Drehmomentes oder der Leistung auf die unterschiedlichen Motoren durch die Wechselrichter realisieren. Je nach Dimensionierung der Wicklungen im Hinblick auf die beispielhaft genannten Parameter wie Windungszahl und/oder Lage der Wicklungen zueinander, reagieren die Motoren unterschiedlich stark auf die von den unterschiedlichen Wechselrichtern an den Wicklungssystemen angelegte Spannung. Damit kann eine Momenten- oder Leistungsaufteilung auf die einzelnen Motoren realisiert werden. Wie stark unterschiedlich die Aufteilung der Momente und/oder der Leistungen auf die einzelnen Motoren ist, hängt von der Ausgestaltung der Wicklungssysteme, insbesondere der Windungszahl ab. Die Dimensionierung der ungleichmäßige Aufteilung hängt dabei vom Anwendungsfall ab. Für Fahrzeuge, sowohl Landfahrzeuge wie auch Luftfahrzeuge, kann dieser Effekt zum Beispiel für Kurvenfahrten derart genutzt werden, Momente auf unterschiedlichen Fahrzeugseiten, rechts/links und/oder vorne/hinten, derart unterschiedlich zu gestalten um die Fahr-/ Flugstabilität zu erhöhen. Ebenso können bei Fördersystemen die Motoren in den Bereichen, die momentan eine hohe Last erfahren mit erhöhtem Moment betrieben werden. Dies verringert die Belastung des Transportgutes und/oder die Belastung auf ein eventuell vorhandenes Transportband eines Fördersystems.

Es hat sich dabei als besonders günstig erwiesen, wenn zwar die Wicklungssysteme eines Motors unterschiedlich ausgeführt sind, allerdings die Motoren untereinander gleich sind. Ebenso ist es günstig, wenn die Impedanz, die sich für den Wechselrichter am Ausgang aus den angeschlossenen Motoren ergibt, für alle Wechselrichter gleich ist. Die Zuordnung, ob es sich um einen ersten, zweiten oder weiteren Wechselrichter handelt ergibt sich daraus, an welchem Wicklungssystem des Motors der Wechselrichter angeschlossen ist. So ergibt sich im Allgemeinen für jeden Motor eine andere Zuordnung der Wechselrichter.

Bei einer weiteren vorteilhaften Ausgestaltungsform sind in den elektrischen Verbindungen zwischen den Wechselrichtern und den Wicklungssystemen der Motoren Schalter angeordnet. Diese Schalter ermöglichen es, einen Redundanzbetrieb bei Ausfall eines Wechselrichters weiter zu ermöglichen. Fällt ein Wechselrichter aus, so werden an dem mit diesen Wechselrichter verbundenen Wicklungssystemen weiterhin Spannungen induziert. Dieses liegt darin begründet, dass die Motoren weiterhin in Betrieb sind und über die übrigen Wicklungssystemen derart mit Energie versorgt werden, dass sich ein veränderlicher, magnetischer Fluss im Motor ausbildet. Je nach Fehler des Wechselrichters können dadurch beispielsweise höhe Ströme, Erdströme, Momentenrippel, d.h. hochfrequente Momentenschwankungen, oder andere unerwünschte Effekte entstehen, die das Antriebssystem weiter schädigen oder auch die Umgebung gefährden können. Um diese Effekte sicher auszuschließen werden in die Verbindungen zwischen Wechselrichter und Wicklungssystem Schalter angeordnet, um im Fehlerfall den Wechselrichter elektrisch von den von ihm zu versorgenden Wicklungssystemen zu trennen. Dabei hat es sich als besonders vorteilhaft erwiesen, am Ausgang eines jeden Wechselrichters jeweils einen oder mehrere Schalter anzuordnen, mit dem sämtliche Verbindungen zu den einzelnen Wicklungssystemen getrennt werden können. Die Schalter können dabei einpolig oder mehrpolig ausgeführt sein.

Es ist bei dem erfindungsgemäßen Antriebssystem möglich, auch ohne dass ein Ausfall eines Wechselrichters vorliegt, einen Wechselrichter abzuschalten und ihn vom Motor zu trennen, um damit zum Beispiel im Betrieb Verluste zu minimieren. Dies kann beispielsweise dann sinnvoll sein, wenn die Motoren betriebsbedingt nur ein geringes Moment oder eine geringe Leistung bereitstellen müssen, die durch eine verringerte Anzahl von in Betrieb befindlichen Wechselrichtern erbracht werden kann. Ebenso kann ein Wechselrichter für Wartungszwecke elektrisch von den Motoren getrennt werden. Der Vorteil liegt dann darin, dass das Antriebssystem nicht komplett abgeschaltet werden muss, sondern mit verringertem Moment oder verringerten Leistung weiterbetrieben werden kann. Die Schalter können dabei auch so angeordnet sein, dass es möglich wird, einzelne Motoren aus dem Antriebssystem elektrisch abzuschalten.

Bei einer weiteren vorteilhaften Ausgestaltungsform ist eine zentrale Regelungseinrichtung zur Ansteuerung der Wechselrichter und/oder der Schalter vorgesehen. Dies hat den Vorteil, die Ansteuerung der Schalter durch eine bereits vorhandene Regelungseinrichtung zu realisieren. Diese zentrale Regelungseinrichtung hat aufgrund ihrer Messwerte Kenntnis davon in welchem Betriebszustand sich das Antriebssystem befindet und ob ein Defekt eines Wechselrichters vorliegt. Abhängig von diesen oder anderen Parametern kann die zentrale Regelungseinrichtung neben dem Abschalten eines Wechselrichters auch das Trennen der elektrischen Verbindung zwischen diesem Wechselrichter und den angeschlossenen Motoren vornehmen.

Als besonders vorteilhaft hat es sich erwiesen, eine zentrale Regelungseinrichtung sowohl zur Ansteuerung aller Wechselrichter als auch aller Schalter vorzusehen. Damit ist eine besonders kostengünstige Realisierungsmöglichkeit gegeben. Noch weiter lässt sich das System im Hinblick auf Kosten und Platzbedarf dadurch optimieren, dass die zentrale Regelungseinrichtung in einem Wechselrichter integriert wird. Auch die Integration in mehrere Wechselrichter hat sich als sinnvoll erwiesen.

Bei einem vorteilhaften Verfahren zum Redundanzbetrieb eines Antriebssystems tauschen die Motoren bei Ausfall eines ersten Wechselrichters mit dem zweiten Wechselrichter und/oder einem oder mehreren weiteren Wechselrichtern elektrische Energie aus. Dieses Verfahren erlaubt, bei einem zuvor vorgestellten Antriebssystem einen Redundanzbetrieb bei Ausfall eines Wechselrichters zu gewährleisten. Da jeder Motor mit verschiedenen Wechselrichtern verbunden ist, stellt das Verfahren sicher, dass auch bei Ausfall eines Wechselrichters die entsprechenden Motoren immer noch hinreichend mit Energie über die anderen Wechselrichter versorgt werden, um weiterhin Drehmoment zu liefern. Auf diese Weise ist ein Betrieb der Motoren mit reduziertem Moment oder reduzierter Leistung im Redundanzbetrieb möglich und zudem kostengünstig und aufwandsarm realisierbar.

Bei einem weiteren vorteilhaften Verfahren wird der Leistungsfluss zwischen den Wechselrichtern und den Wicklungssystemen der Motoren über Schalter und/oder einer zentralen Regelungseinrichtung koordiniert. Die Schalter bewirken, dass die Wechselrichter im Fehlerfall elektrisch von den Wicklungssystemen der Motoren getrennt werden können. Dies ist insbesondere dann erforderlich, wenn ein Defekt in einem Wechselrichter zu einem Stromfluss fließen würde, falls an seinem Ausgang eine Spannung anliegt. Da die Motoren durch die nicht defekten Wechselrichter weiterhin gespeist werden, entsteht auch in dem Wicklungssystem, das dem defekten Wechselrichter zugeordnet ist, eine induzierte Spannung. Um sicherzustellen dass es zu keinem Stromfluss kommt, wird der defekte Wechselrichter durch die Schalter von seinen angeschlossenen Wicklungssystemen getrennt. Darüber hinaus hat die zentrale Regelungseinrichtung die Aufgabe, die Aufteilung der einzelnen Momente oder einzelnen Leistungen auf die vorhandenen Motoren zu koordinieren. Dies kann immer dann geschehen, wenn die Wicklungssysteme der einzelnen Motoren unterschiedlich, wie oben beschrieben, ausgeführt sind. Somit hat die zentrale Regelungseinrichtung dann die Möglichkeiten, sowohl die Aufteilung des Momentes bzw. der Leistung auf die einzelnen Motoren als auch das Abschalten einzelner Wechselrichter zu steuern.

Im Folgenden wird die Erfindung anhand der in den Figuren dargestellten Ausführungsbeispiele näher beschrieben und erläutert. Dabei zeigen:
- FIG 1: ein bekanntes Antriebssystem,
- FIG 2: ein erfindungsgemäßes Antriebssystem mit einer zentralen Regelungseinrichtung,
- FIG 3: ein weiteres erfindungsgemäßes Antriebssystem mit weiteren Schaltern,
- FIG 4: ein weiteres erfindungsgemäßes Antriebssystem mit weiteren Wicklungssystemen und weiteren Wechselrichtern,
- FIG 5: ein weiteres erfindungsgemäßes Antriebssystem mit unterschiedlichen Wicklungssystemen in den jeweiligen Motoren,
- FIG 6: ein weiteres erfindungsgemäßes Antriebssystem mit 4 Wechselrichtern und 4 Motoren,
- FIG 7: ein weiteres erfindungsgemäßes Antriebssystem, bei dem die Wicklungssysteme eines jeden Motors von Wechselrichtern unterschiedlicher Zwischenkreise gespeist werden.

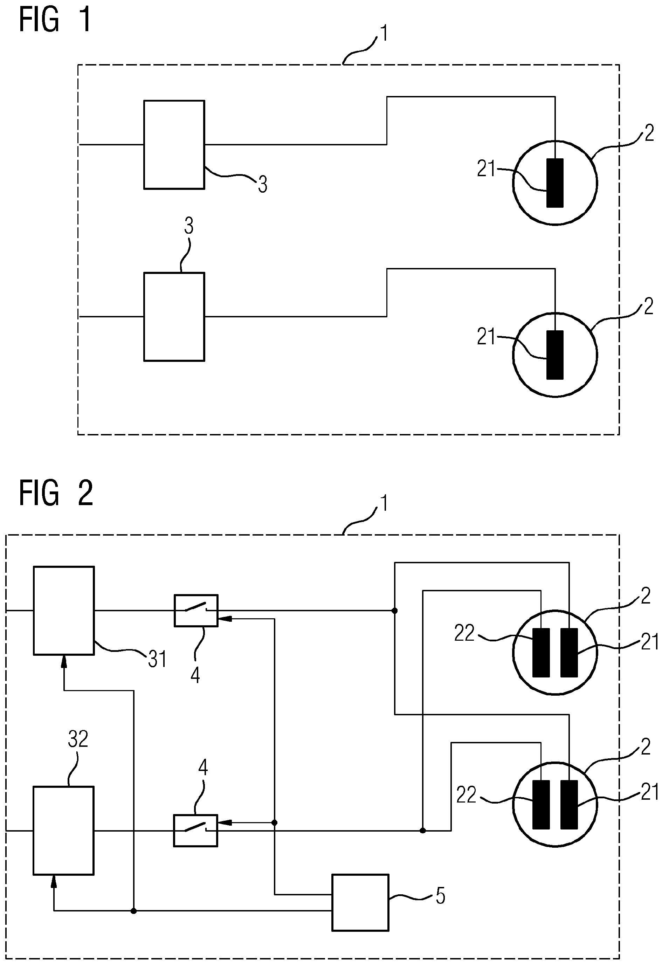

FIG 1 zeigt ein bereits bekanntes Antriebssystem 1. Diese weist zwei Wechselrichter 3 sowie zwei Motoren 2 auf. Die Motoren 2 wiederum beinhalten ein Wicklungssystem 21. Die Motoren 2 werden jeweils über separate Wechselrichter 3 gespeist. Durch diese Anordnung können zwar die Motoren 2 individuell gesteuert oder geregelt werden allerdings hat der Ausfall eines Wechselrichters 3 zur Folge, dass der dort angeschlossene Motor 2 ebenfalls ausfällt und somit kein Moment mehr liefern kann. Des Weiteren sind Gruppenantriebe bekannt, bei dem ein Wechselrichter 3 mehrere Motoren 2 speist. Dies ist zwar kostengünstiger als der in FIG 1 dargestellte Aufbau, allerdings geht bei diesem Gruppenantrieb die Steuerbarkeit bzw. Regelbarkeit der einzelnen Motoren 2 verloren.

FIG 2 zeigt ein erfindungsgemäßes Antriebssystem 1 mit zwei Wechselrichtern 31, 32, zwei Motoren 2 sowie jeweils einen Schalter 4 am Ausgang der Wechselrichter 31, 32 und eine zentrale Regelungseinrichtung 5. Die zentrale Regelungseinrichtung 5 kann separat ausgeführt oder in einem der Wechselrichter 31, 32 integriert sein. In diesem Anwendungsbeispiel weisen die Motoren 2 jeweils zwei Wicklungssysteme 21, 22 auf. Die beiden Wicklungssysteme 21, 22 werden jeweils von einem Wechselrichter 31, 32 mit Energie versorgt. Am Ausgang der Wechselrichter 31, 32 ist jeweils ein Schalter 4 angeordnet. Dieser Schalter 4 ermöglicht es, beim Ausfall eines der beiden Wechselrichter 31, 32 diesen von den angeschlossenen Motoren 2 zu trennen. Dabei werden die Wechselrichter 31, 32 sowie der Schalter 4 von der zentralen Regelungseinrichtung 5 angesteuert. Dazu wertet die zentrale Regelungseinrichtung 5 Messsignale aus, die den Zustand des Antriebssystems 1 beschreiben, um die Wechselrichter 31, 32 anzusteuern und dabei das Antriebssystem 1 in einem Arbeitspunkt regeln zu können. Diese Messsignale sind der Übersichtlichkeit halber in der FIG 2 nicht dargestellt. Erkennt die zentrale Regelungseinrichtung 5 einen Fehler in einem der beiden Wechselrichter 31, 32, so schaltet sie diesen ab und öffnet den zugehörigen Schalter 4 am Ausgang dieses Wechselrichters 31, 32. Damit ist ein Betrieb der Motoren 2 über die Speisung des anderen Wechselrichters 32, 31 weiterhin möglich.

Die Motoren 2 weisen jeweils zwei Wicklungssysteme 21, 22 auf. Dabei wird jedes Wicklungssystem von einem anderen Wechselrichter 31, 32 gespeist. Damit kann im Gegensatz zu dem in FIG 1 dargestellten Antriebssystem sichergestellt werden, dass auch bei Ausfall eines Wechselrichters 31, 32 immer noch beide Motoren 2 Drehmomente erzeugen können. Die Bezeichnung der Wicklungssysteme 21, 22 ergibt sich daraus, mit welchem Wechselrichter 31, 32 dieses verbunden ist. Dabei können die Wicklungssysteme 21, 22 gleich, insbesondere in Bezug auf Windungszahl, oder auch unterschiedlich ausgeführt sein. Falls das erste Wicklungssystem 21 und das zweite Wicklungssystem 22 gleich ausgeführt sind, ergibt sich bei Ausfall eines der beiden Wechselrichter 31, 32, das die beiden Motoren 2 ungefähr mit halber Maximalleistung bzw. mit halbem Maximalmoment weiter betrieben werden können. Höhere Leistungsfähigkeit im Redundanzbetrieb lässt sich durch eine entsprechend größere Dimensionierung von den Wechselrichter 31, 32 und/oder den Motoren 2 erreichen.

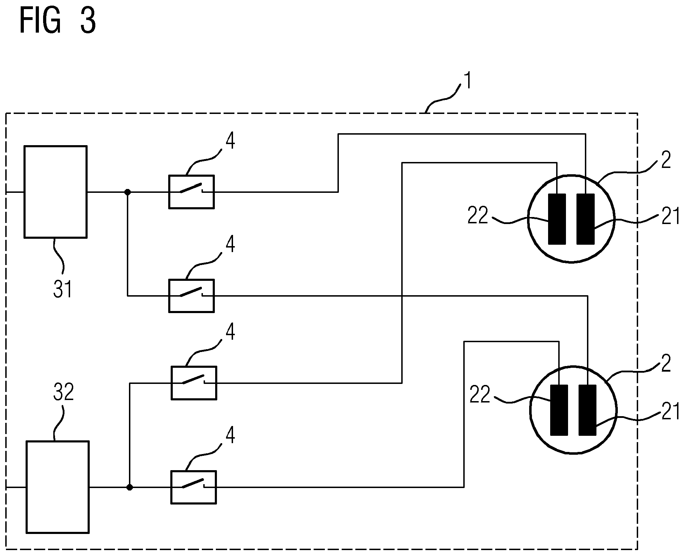

FIG 3 zeigt ein weiteres Ausführungsbeispiel eines erfindungsgemäßen Antriebssystems 1. Zur Vermeidung von Wiederholungen bezüglich übereinstimmender Bestandteile des Antriebssystems 1 wird auf die Beschreibung zu der FIG 2 und den dortigen Bezugszeichen verwiesen. Der Übersichtlichkeit halber wurde auf die Darstellung der zentralen Regelungseinrichtung 5 und den entsprechenden Signalen zu den Wechselrichtern 31, 32 sowie zu den Schaltern 4 verzichtet. Im Gegensatz zu dem in FIG 2 dargestellten Antriebssystem 1 weist das Antriebssystem 1 der FIG 3 Schalter 4 in den Zuleitungen zwischen Wechselrichter 31, 32 und Wicklungssystemen 21, 22 der Motoren 2 auf. Mit dieser Anordnung ist es möglich, nicht nur einen Wechselrichter 31, 32 von den angeschlossenen Motoren 2 zu trennen, sondern auch umgekehrt einen Motor 2 von seinen angeschlossenen Wechselrichtern 31, 32 zu trennen. Mit dieser Anordnung der Schalter 4 ist es somit auch möglich, beim Defekt eines Motors 2 den oder die anderen Motoren 2 weiterhin mit Energie aus den Wechselrichtern 31, 32 de Antriebssystems 1 zu versorgen. Auch das Trennen eines Motors 2 mit beiden Wicklungssystemen 21, 22 von seinen Wechselrichtern 31, 32 ist für Wartungszwecke möglich. Eine weitere Möglichkeit der Anordnung der Schalter besteht darin, jeweils einen Schalter 4 am Ausgang der Wechselrichters 31, 32 anzuordnen und einen zweiten Schalter 4 vom Wechselrichter 31, 32 aus gesehen hinter der Verzweigung zu den einzelnen Motoren 2 anzuordnen. Die Anordnung dieser Schalter 4 kann in alle abzweigenden Verbindungen, in manchen abzweigenden Verbindungen oder auch nur in einer abzweigenden Verbindung angeordnet werden.

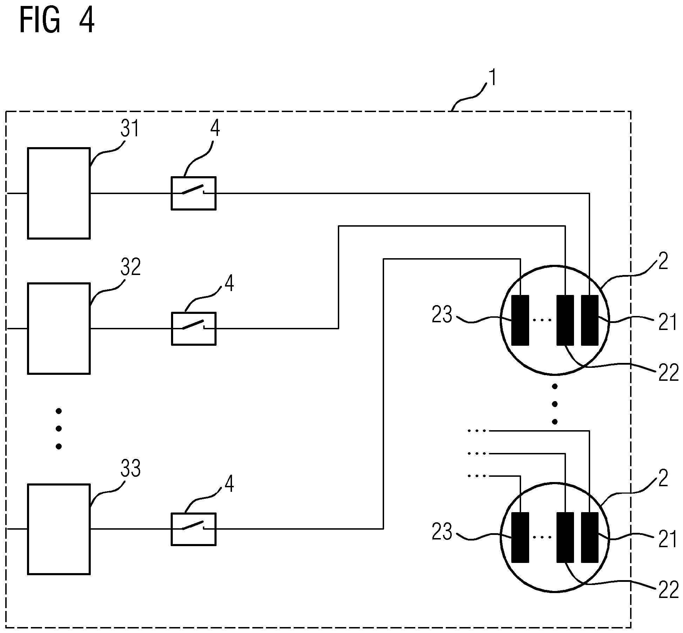

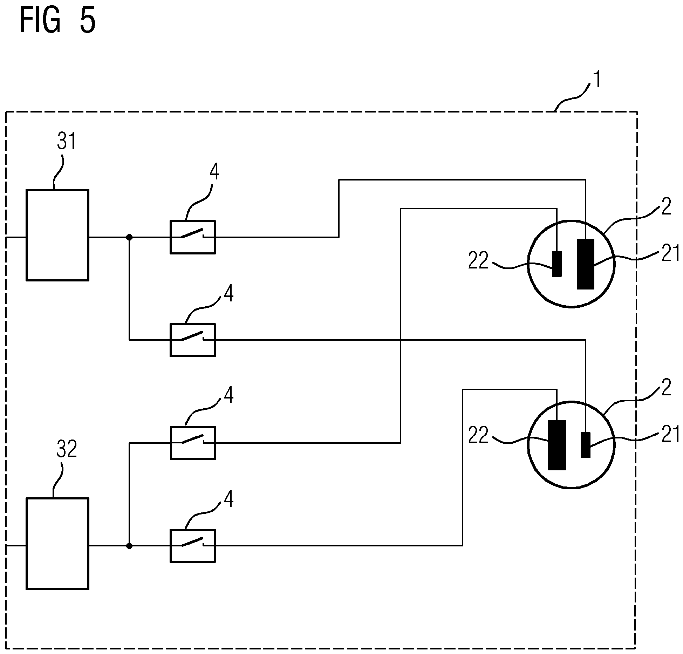

FIG 4 zeigt ein weiteres Ausführungsbeispiel eines erfindungsgemäßen Antriebssystems 1. Zur Vermeidung von Wiederholungen bezüglich übereinstimmender Bestandteile des Antriebssystems 1 wird auf die Beschreibung zu den vorgenannten Figuren 1 bis 3 sowie die dort eingeführten Bezugszeichen verwiesen. Die Motoren 2 dieses Ausführungsbeispiels weisen neben dem ersten Wicklungssystem 21 und dem zweiten Wicklungssystem 22 des Motors 2 ein weiteres Wicklungssystem 23 auf. Ebenso ist es möglich, dass es sich hierbei um mehrere weitere Wicklungssysteme 23 handelt. Die elektrische Versorgung des weiteren Wicklungssystems 23 erfolgt über einen oder mehrere weitere Wechselrichter 33. Auch in diesem Beispiel ist für die Versorgung jedes Wicklungssystems ein separater Wechselrichter 31, 32, 33 vorgesehen. Die vorliegende Figur zeigt dabei der Übersichtlichkeit halber nur den Anschluss eines Motors 2 an die Wechselrichter 31, 32, 33 des Antriebssystems 1. Das Antriebssystem 1 kann dabei eine beliebige Anzahl von Motoren 2 aufweisen. Als günstig hat es sich erwiesen, wenn die Anzahl der Motoren 2 der Anzahl der Wechselrichter 31, 32 und 33 entspricht. Vergleichbar mit FIG 2 weist jeder Wechselrichter 31, 32, 33 ausgangsseitig jeweils einen Schalter 4 auf, der es ermöglicht, im Falle eines Fehlers in einem der Wechselrichter 31, 32, 33 diesen von den von ihm zu versorgenden Motoren 2 zu trennen. Alternativ ist es auch möglich, die Schalter in die Zuleitungen zwischen Wechselrichter 31, 32 und 33 und den Wicklungssystemen 21, 22 und 23 entsprechend FIG 3 und den dort gemachten Beschreibungen anzuordnen. Die Anzahl der Wicklungssysteme 21, 22 und 23 kann je nach Anwendungsfall auch kleiner sein als die Anzahl der im Antriebssystem 1 befindlichen Wechselrichter 31, 32, 33. Entsprechende Anordnungen zeigen die nachfolgenden Figuren am Beispiel eines Motors 2 mit zwei Wicklungssystemen 21, 22. Diese im Folgenden anhand der FIG 5 bis FIG 7 erläuterten Anordnungen können allerdings ohne Weiteres auf Motoren 2 mit mehr als zwei Wicklungssystemen 21, 22 übertragen werden.

FIG 5 zeigt ein weiteres Anwendungsbeispiel eines Antriebssystems 1, bei dem sich die einzelnen Wicklungssysteme 21, 22 eines Motors 2 unterscheiden. Zur Vermeidung von Wiederholungen bezüglich übereinstimmender Bestandteile des Antriebssystems wird wiederum auf die Beschreibung zu den Figuren 1 bis 4 sowie den dort eingeführten Bezugszeichen verwiesen. Die Ansteuerung eines Wechselrichters 31, 32 wirkt sich aufgrund der unterschiedlichen Ausprägung der einzelnen Wicklungssysteme 21, 22 unterschiedlich auf die einzelnen Motoren 2 aus. Dies bedeutet konkret, dass eine Ausgangsspannung an einem Wechselrichter 31, 32 an den unterschiedlichen, angeschlossenen Wicklungssysteme 21, 22 der Motoren 2 zu unterschiedlichen Strömen und somit zu unterschiedlichen Momenten führt. Mit dieser Anordnung ist es möglich, entsprechend der Auslegung der Motoren 2 eine Aufteilung der entsprechenden Drehmomente bzw. Leistungen auf die einzelnen Motoren 2 vorzunehmen.

Dabei können die Motoren 2 untereinander identisch ausgeführt sein. Die Spannung am Ausgang eines jeden Wechselrichters 3, 31, 32 wirkt sich dabei unterschiedlich auf die unterschiedlichen Motoren 2 aus. So wirkt sich in dem dargestellten Ausführungsbeispiel der erste Wechselrichter 31 auf den oberen Motor 2 genauso aus wie der zweite Wechselrichter auf den unteren Motor 2. Auf die jeweiligen anderen Motoren 2 haben die Wechselrichter jeweils einen anderen Einfluss. Somit lässt sich durch eine geeignete Ausgangsspannung an den Wechselrichtern 31, 32, 33 eine Aufteilung der Drehmomente bzw. der Leistung auf die einzelnen Motoren beeinflussen. Dieses kann sowohl gesteuert oder, über geeignete Rückkoppelsignale wie beispielsweise Motorströme, geregelt erfolgen.

FIG 6 zeigt ein weiteres Ausführungsbeispiel eines Antriebssystems 1 mit vier Motoren 2 und vier Wechselrichtern 3. Zur Vermeidung von Wiederholungen bezüglich übereinstimmender Bestandteile des Systems wird wiederum auf die Beschreibung zu den vorherigen Figuren sowie auf die dort eingeführten Bezugszeichen verwiesen. Dieses Ausführungsbeispiel zeigt, wie es möglich ist, vier Motoren 2 mit jeweils zwei Wicklungssystemen 21, 22 an insgesamt vier Wechselrichter 3 anzuschließen. Allerdings ist es in diesem Beispiel nicht mehr möglich, die einzelnen Wechselrichter 3 als ersten Wechselrichter 31 und zweiten Wechselrichter 32 zu kennzeichnen, da jeder Wechselrichter 3 für einen anderen Motor einen anderen Wechselrichter 3 darstellt. So ist für den in FIG 6 dargestellten obersten Motor 2 der oberste Wechselrichter 3 der erste Wechselrichter 31 und der darunterliegende Wechselrichter 3 der zweite Wechselrichter 32. Für den zweiten Motor von oben stellt sich die Situation so dar, dass der zweitoberste Wechselrichter 3 der erste Wechselrichter 31 und der drittoberste Wechselrichter 3 der zweite Wechselrichter 32 ist. Die beiden Wicklungssysteme 21, 22 der Motoren können in diesem Aufbau gleich sein oder sich insbesondere in der Windungszahl unterscheiden. Die einzelnen Wicklungssysteme können dabei gleichphasig angeordnet sein oder einen Versatz zueinander aufweisen. In dem vorliegenden Ausführungsbeispiel ist ein Versatz um einen Winkel von 90° oder 180° möglich. Diese Verschaltung zwischen Wechselrichter 3 und den einzelnen Wicklungssystemen 21, 22 der Motoren 2 stellt sicher, dass auch bei Ausfall von zwei Wechselrichtern 3 maximal ein Motor komplett ausfällt, d.h. kein Moment oder Leistung mehr liefert. Die übrigen Motoren können zumindest mit einem reduzierten Moment bzw. mit reduzierter Leistung weiterbetrieben werden. Gleichzeitig ist es bei der Wahl eines Versatzes zwischen den einzelnen Wicklungssystemen möglich, die Aufteilung der einzelnen Momente bzw. Leistungen auf die Motoren aktiv zu beeinflussen.

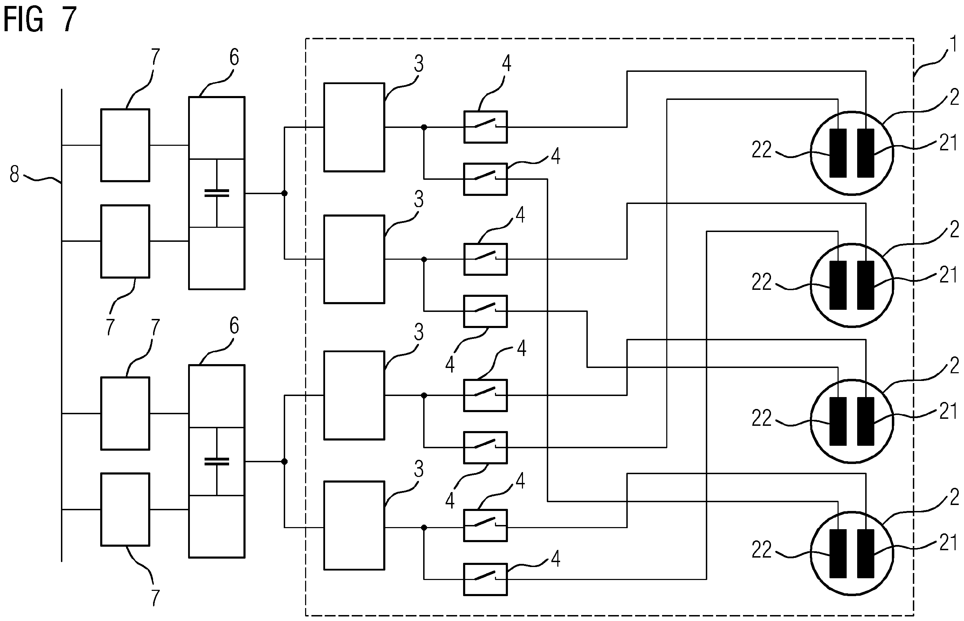

FIG 7 zeigt ein weiteres Anwendungsbeispiel eines erfindungsgemäßen Antriebssystems 1. Dieses Ausführungsbeispiel gibt an, wie die Wechselrichter 3 aus dem Energieversorgungsnetz 8 mit Energie versorgt werden können. Zur Vermeidung von Wiederholungen bezüglich übereinstimmender Bestandteile des Antriebssystems wird wiederum auf die Beschreibungen zu den Figuren 1 bis 6 sowie die dort eingeführten Bezugszeichen verwiesen. Die Eingangsstromrichter 7 entnehmen dem Energieversorgungsnetz 8 Energie um diese in einen Zwischenkreis 6 einzuspeisen. Der Zwischenkreis 6 wiederum versorgt die einzelnen Stromwechselrichter 3. Aus Gründen der Redundanz ist es günstig, mindestens zwei Zwischenkreise 6 vorzusehen. Damit die Motoren 2 auch bei Ausfall eines Zwischenkreises 6 nicht komplett ausfallen, werden die einzelnen Wicklungssysteme 21, 22 der Motoren 2 von Wechselrichtern 3 versorgt, die aus unterschiedlichen Zwischenkreisen 6 mit Energie gespeist werden. Selbst bei Ausfall eines Zwischenkreises 6 und dem damit verbundenen Ausfall der daran angeschlossenen Wechselrichter 3 kann zumindest ein Wicklungssystem 21, 22 der Motoren 2 noch immer mit Energie versorgt werden. Dies führt zu einer hohen Versorgungssicherheit des erfindungsgemäßen Antriebssystems 1.

Obwohl die Erfindung im Detail durch die bevorzugten Ausführungsbeispiele näher illustriert und beschrieben wurden, ist die Erfindung nicht alleine auf die offenbarten Beispiele beschränkt und andere Variationen können vom Fachmann hieraus abgeleitet werden ohne den Schutzumfang der Erfindung zu verlassen.

## Patentansprüche

1. Antriebssystem (1), wobei das Antriebssystem (1) mindestens zwei Wechselrichter (3,31,32,33) und mindestens zwei Motoren (2) aufweisen, wobei die Motoren (2) jeweils einen Stator und einen Läufer aufweisen, **dadurch gekennzeichnet, dass** die zumindest zwei Motoren (2) im Stator jeweils mindestens ein erstes Wicklungssystem (21) und ein zweites Wicklungssystem (22) aufweisen, wobei das jeweilige erste Wicklungssystem (21) mit einem ersten Wechselrichter (31) und das jeweilige zweite Wicklungssystem (22) mit einem zweiten Wechselrichter (32) elektrisch leitend verbunden sind, wobei die Wicklungssysteme (21,22,23) der einzelnen Motoren (2) derart ausgebildet sind, dass eine Leistungsaufteilung und/oder Momentenaufteilung zwischen den Motoren (2) durch die Wechselrichter (3,31,32,33) steuerbar und/oder regelbar ist.

2. Antriebssystem nach Anspruch 1, wobei sich die Wicklungssysteme (21,22,23) in Bezug auf die Windungszahl oder der Lage zueinander unterscheiden.

3. Antriebssystem (1) nach einem der Ansprüche 1 oder 2, **dadurch gekennzeichnet, dass** die zumindest zwei Motoren (2) im Stator mindestens ein weiteres Wicklungssystem (23) aufweisen, welches mit einem weiteren Wechselrichter (33) elektrisch leitend verbunden ist.

4. Antriebssystem (1) nach einem der Ansprüche 1 bis 3, **dadurch gekennzeichnet, dass** die Wicklungssysteme (21,22,23) der jeweiligen Motoren (2) mit Wechselrichtern (3,31,32,33) elektrisch verbunden sind, die an unterschiedlichen Zwischenkreisen (6) angeordnet sind.

5. Antriebssystem (1) nach einem der Ansprüche 1 bis 4, **dadurch gekennzeichnet, dass** in die elektrischen Verbindungen zwischen den Wechselrichtern (3, 31,32,33) und den Wicklungssystemen (21,22,23) der Motoren (2) Schalter (4) angeordnet sind.

6. Antriebssystem (1) nach einem der Ansprüche 1 bis 5, **dadurch gekennzeichnet, dass** eine zentrale Regelungseinrichtung (5) zur Ansteuerung der Wechselrichter (3,31,32,33) und/oder der Schalter (4) vorgesehen ist.

7. Fahrzeug, insbesondere Luftfahrzeug oder Schienenfahrzeug mit einem Antriebssystem (1) nach einem der Ansprüche 1 bis 6.

8. Flugzeug mit einem Antriebssystem (1) nach einem der Ansprüche 1 bis 6, wobei die beiden Motoren (2) auf gegenüberliegenden Seiten des Flugzeugs angeordnet sind, wobei einer der beiden Motoren (2) am rechten Flügel und einer der beiden Motoren (2) am linken Flügel angeordnet sind.

9. Verfahren zum Redundanzbetrieb eines Antriebssystems (1) nach einem der Ansprüche 1 bis 6, **dadurch gekennzeichnet, dass** zumindest ein Motor (2) bei Ausfall eines ersten Wechselrichters (31) mit dem zweiten Wechselrichter (32) und/oder einem oder mehreren weiteren Wechselrichtern (33) elektrische Energie austauscht.

10. Verfahren nach Anspruch 9, wobei der Energiefluss zwischen Wechselrichtern (3,31,32,33) und Wicklungssystemen (21,22,23) der Motoren (2) über die Schalter (4) und/oder einer zentralen Regelungseinrichtung (5) koordiniert wird.

11. Verfahren nach Anspruch 10, wobei beim Ausfall eines der Wechselrichter (3,31,32,33) der Schalter (4) diesen ausgefallenen Wechselrichter (3,31,32,33) von den angeschlossenen Motoren 2 trennt, indem nach der Erkennung des Fehlers in einem der Wechselrichter (3,31,32,33) die zentrale Regelungseinrichtung (5) den zugehörigen Schalter (4) am Ausgang dieses Wechselrichters (3,31,32,33) öffnet.

## Claims

1. Drive system (1), wherein the drive system (1) has at least two inverters (3, 31, 32, 33) and at least two motors (2), wherein the motors (2) each have a stator and a rotor, **characterized in that** the at least two motors (2) each have at least a first winding system (21) and a second winding system (22) in the stator, wherein the respective first winding system (21) is electrically conductively connected to a first inverter (31) and the respective second winding system (22) is electrically conductively connected to a second inverter (32), wherein the winding systems (21, 22, 23) of the individual motors (2) are formed in such a way that a power distribution and/or torque distribution between the motors (2) can be subjected to open-loop control and/or closed-loop control by the inverters (3, 31, 32, 33) .

2. Drive system according to Claim 1, wherein the winding systems (21, 22, 23) differ from one another in respect of the number of turns or the position.

3. Drive system (1) according to either of Claims 1 and 2, **characterized in that** the at least two motors (2) have at least one further winding system (23) in the stator, which further winding system is electrically conductively connected to a further inverter (33).

4. Drive system (1) according to one of Claims 1 to 3, **characterized in that** the winding systems (21, 22, 23) of the respective motors (2) are electrically connected to inverters (3, 31, 32, 33) which are arranged on different intermediate circuits (6).

5. Drive system (1) according to one of Claims 1 to 4, **characterized in that** switches (4) are arranged in the electrical connections between the inverters (3, 31, 32, 33) and the winding systems (21, 22, 23) of the motors (2).

6. Drive system (1) according to one of Claims 1 to 5, **characterized in that** a central control device (5) is provided for driving the inverters (3, 31, 32, 33) and/or the switches (4) .

7. Vehicle, in particular aircraft or rail vehicle, comprising a drive system (1) according to one of Claims 1 to 6.

8. Airplane comprising a drive system (1) according to one of Claims 1 to 6, wherein the two motors (2) are arranged on opposite sides of the airplane, wherein one of the two motors (2) is arranged on the right-hand-side wing and one of the two motors (2) on the left-hand-side wing.

9. Method for redundant operation of a drive system (1) according to one of Claims 1 to 6, **characterized in that** at least one motor (2) exchanges electrical energy with the second inverter (32) and/or one or more further inverters (33) in the event of failure of a first inverter (31).

10. Method according to Claim 9, wherein the flow of energy between the inverters (3, 31, 32, 33) and the winding systems (21, 22, 23) of the motors (2) is coordinated by means of the switches (4) and/or a central control device (5).

11. Method according to Claim 10, wherein, in the event of failure of one of the inverters (3, 31, 32, 33), the switch (4) disconnects said failed inverter (3, 31, 32, 33) from the connected motors (2) by, after the fault in one of the inverters (3, 31, 32, 33) is identified, the central control device (5) opening the associated switch (4) at the output of this inverter (3, 31, 32, 33).

## Revendications

1. Système (1) de propulsion, le système (1) de propulsion ayant au moins deux onduleurs (3, 31, 32, 33) et au moins deux moteurs (2), les moteurs (2) ayant chacun un stator et un rotor, **caractérisé en ce que** les au moins deux moteurs (2) ont, dans le stator, chacun au moins un premier système (21) d'enroulement et un deuxième système (22) d'enroulement, le premier système (21) d'enroulement étant connecté d'une manière conductrice de l'électricité à un premier onduleur (31) et le deuxième système (22) d'enroulement a un deuxième onduleur (32), les systèmes (21, 22, 23) d'enroulement des divers moteurs (2) étant constitués de manière à pouvoir commander et/ou régler une répartition de puissance et/ou une répartition de couple entre les moteurs (2) par les onduleurs (3, 31, 32, 33).

2. Système d'entraînement suivant la revendication 1, dans lequel les systèmes (21, 22, 23) d'enroulement se distinguent les uns des autres en ce qui concerne le nombre de spires ou la position.

3. Système d'entraînement suivant l'une des revendications 1 ou 2,
**caractérisé en ce que** les au moins deux moteurs (2) ont dans le stator au moins un autre système (23) d'enroulement, qui est connecté d'une manière conductrice de l'électricité à un autre onduleur (33).

4. Système d'entraînement suivant l'une des revendications 1 à 3,
**caractérisé en ce que** le système (21, 22, 23) d'enroulement des moteurs (2) respectifs sont connectés électriquement à des onduleurs (3, 31, 32, 33), qui sont montés dans des circuits (6) intermédiaires différents.

5. Système d'entraînement suivant l'une des revendications 1 à 4,
**caractérisé en ce que** des interrupteurs (4) sont montés dans les connexions électriques entre les onduleurs (3, 31, 32, 33) et les systèmes (21, 22, 23) d'enroulement des moteurs (2).

6. Système d'entraînement suivant l'une des revendications 1 à 5,
**caractérisé en ce qu'**un dispositif (5) central de régulation est prévu pour commander les onduleurs (3, 31, 32, 33) et/ou les interrupteurs (4).

7. Véhicule, notamment aéronef ou véhicule ferroviaire, ayant un système (1) de propulsion suivant l'une des revendications 1 à 6.

8. Aéronef ayant un système (1) de propulsion suivant l'une des revendications 1 à 6, dans lequel les deux moteurs (2) sont montés sur des côtés opposés de l'aéronef, l'un des deux moteurs (2) étant monté sur l'aile droite et l'un des deux moteurs (2) sur l'aile gauche.

9. Procédé pour faire fonctionner de manière redondante un système (1) de propulsion suivant l'une des revendications 1 à 6,
**caractérisé en ce qu'**au moins un moteur (2), si un premier onduleur (31) est défaillant, échange de l'énergie électrique avec le deuxième onduleur (2) et/ou un ou plusieurs autres onduleurs (33).

10. Procédé suivant la revendication 9, dans lequel on coordonne le flux d'énergie entre des onduleurs (3, 31, 32, 33) et des systèmes (21, 22, 23) d'enroulement des moteurs (2) par les interrupteurs (4) et/ou par un dispositif (5) central de régulation.

11. Procédé suivant la revendication 10, dans lequel, si l'un des onduleurs (3, 31, 32, 33) est défaillant, l'interrupteur (4) sépare cet onduleur (3, 31, 32, 33) défaillant des moteurs (2) connectés, par le fait qu'après la détection du défaut de l'un des onduleurs (3, 31, 32, 33), l'unité (5) centrale de régulation ouvre l'interrupteur (4) associé à la sortie de cet onduleur (3, 31, 32, 33).
